# EUROPÄISCHE PATENTANMELDUNG

(11) **EP 3 222 372 A1**
(43) Veröffentlichungstag der Anmeldung: **27.09.2017**
(21) Anmeldenummer: 16162218.8
(22) Anmeldetag: 24.03.2016
(51) Int. Cl.: B22F 3/105, B28B 1/00, B29C 67/00

(54) **VERFAHREN ZUM ADDITIVEN HERSTELLEN EINES BAUTEILS MIT MEHREREN BAUMATERIALIEN UND BAUTEIL**

(71) Anmelder: Siemens Aktiengesellschaft, 80333 München (DE)
(72) Erfinder: Heinze, Christoph, 10365 Berlin (DE); Reiche, Ralph, 13465 Berlin (DE)

(57) **Zusammenfassung**

Die Erfindung betrifft ein Verfahren zum additiven Herstellen eines Bauteils. Außerdem betrifft die Erfindung ein Bauteil, was nach diesem Verfahren herstellbar ist. Bei dem Verfahren werden lagenweise Partikel aus unterschiedlichen Baumaterialien verfestigt, indem die Lagen (31) mit einem Energiestrahl wie einem Laserstrahl behandelt werden. Erfindungsgemäß ist vorgesehen, dass das Bauteil aus einem ersten Teilvolumen (23a) und einem zweiten Teilvolumen (23b) aus jeweils unterschiedlichen Baumaterialien ausgebildet ist, wobei zwischen diesen Teilvolumina (23a, 23b) eine Übergangszone (25) aus beiden Baumaterialien gebildet wird. Hierbei können beispielsweise durch das additive Herstellen T-Profile (36) mit Hinterschneidungen (37) ausgebildet werden, so dass eine belastbare Verbindung zwischen dem Teilvolumen (23a) und dem Teilvolumen (23b) entsteht. Die Verbindung wird vorteilhaft dadurch mechanisch belastbar und kann auch bei unterschiedlichen thermischen Ausdehnungskoeffizienten der Baumaterialien einer thermischen Beanspruchung besser standhalten.

## Beschreibung

Die Erfindung betrifft ein Verfahren zum additiven Herstellen eines Bauteils. Bei diesem Verfahren werden lagenweise Partikel mindestens zweier unterschiedlicher Baumaterialien auf eine Bauplattform oder das in Entstehung befindliche Bauteil aufgetragen (nur die erste Lage befindet sich auf der Bauplattform, die folgenden Lagen dann auf dem in Entstehung befindlichen Bauteil). Danach werden Lagen des in Entstehung befindlichen Bauteils erzeugt, indem die Partikel durch einen Energiestrahl lokal verfestigt werden. Außerdem betrifft die Erfindung ein auf diese Weise herstellbares Bauteil.

Additive Herstellungsverfahren der eingangs angegebenen Art sind allgemein bekannt. Als additive Fertigungsverfahren im Sinne dieser Anmeldung sollen Verfahren verstanden werden, bei denen das Material, aus dem ein Bauteil hergestellt werden soll, dem Bauteil während der Entstehung hinzugefügt wird. Dabei entsteht das Bauteil bereits in seiner endgültigen Gestalt oder zumindest annähernd in dieser Gestalt. Das Baumaterial ist pulverförmig, wobei durch das additive Fertigungsverfahren das Material zur Herstellung des Bauteils physikalisch durch Einbringung von Wärme verfestigt wird. Das Verfestigen kann durch Aufschmelzen oder Sintern erfolgen.

Um das Bauteil herstellen zu können, werden das Bauteil beschreibende Daten (CAD-Modell) für das gewählte additive Fertigungsverfahren aufbereitet. Die Daten werden zur Erstellung von Anweisungen für die Fertigungsanlage in an das Fertigungsverfahren angepasste Daten des Bauteils umgewandelt, damit in der Fertigungsanlage die geeigneten Prozessschritte zur sukzessiven Herstellung des Bauteils ablaufen können. Die Daten werden dafür so aufbereitet, dass die geometrischen Daten für die jeweils herzustellenden Lagen (Slices) des Bauteils zur Verfügung stehen, was auch als Slicen bezeichnet wird.

Als Beispiele für das additive Fertigen können das selektive Lasersintern (auch SLS für Selective Laser Sintering), das Selektive Laserschmelzen (auch SLM für Slective Laser Melting) und das Elektronenstrahlschmelzen (auch EBM für Electrone Beam Melting) genannt werden. Diese Verfahren eignen sich insbesondere zur Verarbeitung von metallischen Werkstoffen in Form von Pulvern, mit denen Konstruktionsbauteile hergestellt werden können.

Beim SLM, SLS und EBM werden die Bauteile lagenweise vorzugsweise in einem Pulverbett hergestellt. Diese Verfahren werden daher auch als pulverbettbasierte additive Fertigungsverfahren bezeichnet. Es wird jeweils eine Lage des Pulvers in dem Pulverbett erzeugt, die durch die Energiequelle (Laser oder Elektronenstrahl) anschließend in denjenigen Bereichen lokal aufgeschmolzen oder gesintert wird, in denen das Bauteil entstehen soll. So wird das Bauteil sukzessive lagenweise erzeugt und kann nach Fertigstellung dem Pulverbett entnommen werden.

Für das SLS ist charakteristisch, dass die Pulverteilchen bei diesen Verfahren nicht vollständig aufgeschmolzen werden. Beim SLS wird bei Wahl der Sintertemperatur darauf geachtet, dass diese unterhalb der Schmelztemperatur der Pulverpartikel liegt. Demgegenüber liegt beim SLM und LMD der Energieeintrag betragsmäßig bewusst so hoch, dass die Pulverpartikel vollständig aufgeschmolzen werden.

In M. Ott, "Multimaterialverarbeitung bei der additiven strahl- und pulverbettbasierten Fertigung", einer am 14.02.2012 an der Technischen Universität München eingereichten Dissertation, wird ein mögliches Verfahren vorgestellt, wie bei der pulverbettbasierten additiven Fertigung verschiedene Baumaterialien verarbeitet werden können. Zu diesem Zweck wird das Baumaterial mittels einer geeigneten Dosiereinrichtung ortsaufgelöst zugeführt. Dies bedeutet, dass die Dosiereinrichtung verschiedene Teilbereiche der aktuell herzustellenden Lage direkt adressieren kann und dort eines von mehreren Baumaterialien ablegen kann. Das Auflösungsvermögen bei der Ortsauflösung hängt von der Dosiergenauigkeit und der kleinsten möglichen Dosiermenge der Dosiereinrichtung ab, wobei das abgelegte Material einer Lage entweder nacheinander für jede abgelegte Materialart oder gemeinsam für alle Materialarten durch den Laserstrahl verfestigt werden kann. Das Verfestigen erfolgt je nach eingebrachter Energiemenge durch Aufschmelzen der Partikel der Baumaterialien oder durch deren Versinterung, wenn ein Energieeintrag gewählt wird, der zu einer Erwärmung auf Temperaturen unterhalb des Schmelzpunkts des Baumaterials führt. Als Energiestrahl kommt hierbei vorzugsweise ein Laserstrahl oder ein Elektronenstrahl zum Einsatz.

Die Aufgabe der Erfindung liegt darin, bei einem Verfahren zum additiven Herstellen eines Bauteils aus mehreren Baumaterialien den Gestaltungsspielraum für die zu erzeugenden Bauteile hinsichtlich Konstruktion und Materialwahl zu vergrößern sowie ein auf diese Weise herstellbares Bauteil anzugeben.

Die Aufgabe wird durch das eingangs angegebene Verfahren erfindungsgemäß dadurch gelöst, dass ein erstes Teilvolumen des Bauteils aus einem ersten Baumaterial hergestellt wird und ein zweites Teilvolumen des Bauteils aus einem zweiten Baumaterial hergestellt wird. Um diese beiden Teilvolumina vorteilhaft zuverlässig verbinden zu können, wird ein drittes Teilvolumen des Bauteils als Übergangszone hergestellt, wobei diese Übergangszone zwischen dem ersten Teilvolumen und dem zweiten Teilvolumen liegt und sowohl aus dem ersten Baumaterial als auch aus dem zweiten Baumaterial gebildet wird. Hierdurch kann vorteilhaft ein abrupter Übergang zwischen ersten Teilvolumen und zweiten Teilvolumen verhindert werden, da dies zu Problemen führen kann, die durch einen abrupten Materialwechsel hervorgerufen werden können. Haben die Materialien beispielsweise unterschiedliche thermische Ausdehnungskoeffizienten, entsteht in Abhängigkeit von der Bauteiltemperatur eine Spannung zwischen den beiden Teilvolumina. Auch kann die Haftung der beiden Teilvolumina aneinander gefährdet sein. Die erfindungsgemäße Übergangszone macht es jedoch möglich, durch eine Kombination des ersten Baumaterials und des zweiten Baumaterials eine Strukturierung der Übergangszone vorzusehen, die einem abrupten Materialwechsel entgegenwirkt. Diese Strukturierung führt zudem zu einer Vergrößerung der Grenzflächen zwischen dem ersten Teilvolumen und dem zweiten Teilvolumen, wodurch der Übergang zwischen den beiden Teilvolumina ohne ein Versagen höheren Spannungen (thermische Ausdehnung, mechanische Belastung) ausgesetzt werden kann. Dies wird im Folgenden noch an Beispielen näher erläutert.

Durch das additive Herstellungsverfahren entsteht ein großer Gestaltungsspielraum für die Strukturierung der Übergangszone. Die kleinste mögliche Struktur liegt im Bereich der Partikelgröße der verwendeten Baumaterialien. Neben dem ersten und dem zweiten Baumaterial können auch weitere Baumaterialien zum Einsatz kommen. Diese müssen in dem Prozess zum additiven Herstellen zur Verfügung gestellt werden. Das Bauteil kann dann auch aus mehr als zwei Teilvolumina zusammengesetzt sein.

Bei der Wahl der herzustellenden Strukturen können vorteilhaft die Anforderungen an das Bauteil berücksichtigt werden. Es lässt sich vorteilhaft die Haftung der Teilvolumina aneinander sowie das thermische Ausdehnungsverhalten des Bauteils als Ganzes beeinflussen. Die Eigenschaften der Übergangszone können vorteilhaft auch durch Simulationsrechnungen bestimmt werden, wobei hierbei auch bionische Methoden zum Einsatz kommen können. Durch eine iterative Entwicklung der Strukturen können diese vorteilhaft optimiert werden. Simulationsrechnungen können auch durch Versuche überprüft werden.

Je nach Wahl der Materialien können auch die Eigenschaften des Bauteils beeinflusst werden. Beeinflusst werden können insbesondere die elektrischen Eigenschaften, die magnetischen Eigenschaften und die chemischen Eigenschaften des Bauteils. So kann eines der beiden Teilvolumina die Oberfläche des Bauteils bilden, so dass diese Eigenschaften an der Oberfläche vorliegen. Das andere Teilvolumen im Inneren des Bauteils kann insbesondere hinsichtlich der erforderlichen mechanischen Eigenschaften optimiert werden.

Die genannten Vorteile lassen sich auch durch ein in der genannten Weise herstellbares Bauteil erreichen, welches die Aufgabe erfindungsgemäß löst. Dieses weist eine strukturierte Übergangszone aus den Baumaterialien der benachbarten Teilvolumina auf, wobei diese durch ein additives Herstellungsverfahren erzeugt werden kann.

Ist im Zusammenhang mit dieser Anmeldung von dem ersten Teilvolumen oder dem zweiten Teilvolumen die Rede, so ist immer eines der beiden Teilvolumina gemeint, die diesseits und jenseits der Übergangszone liegen. Ist eine Unterscheidung nicht wichtig, so ist im Zusammenhang dieser Anmeldung lediglich von einem Teilvolumen die Rede, wobei dieses das erste oder das zweite Teilvolumen sein kann. Selbiges gilt auch für die Begriffe erstes Volumenelement und zweites Volumenelement, wobei die Übergangszone aus einer Vielzahl von Volumenelementen zusammengesetzt ist.

Auch das Baumaterial wird unterschieden zwischen einem ersten Baumaterial für das erste Teilvolumen, einem zweiten Baumaterial für das zweite Teilvolumen. Ist im Zusammenhang dieser Anmeldung lediglich von einem Baumaterial die Rede, so ist eine Unterscheidung zwischen erstem und zweitem Baumaterial in diesem Kontext nicht erforderlich und es ist eines dieser Baumaterialien gemeint. Neben dem ersten und zweiten Baumaterial können auch weitere Baumaterialien verwendet werden.

Das erste, das zweite oder ein weiteres Baumaterial kann zum Beispiel der Herstellung einer Diffusionssperrschicht dienen, wobei diese zum benachbarten Teilvolumen (beispielsweise dem ersten oder zweiten Teilvolumen) eine Übergangszone aufweist. Die Verwendung einer Diffusionssperrschicht verringert zum einen die Diffusion der kritischen Legierungsbestandteile während der additiven Herstellung des Bauteils, wobei die lokale Erwärmung des Bauteils bis zum Schmelzpunkt oder darüber erfolgen kann und eine Diffusion auch in der auf das Schmelzen nachfolgenden Abkühlung des Bauteils noch möglich ist. Insbesondere ermöglicht es die Diffusionssperrschicht aber auch, dass das fertiggestellte Bauteil thermisch nachbehandelt werden kann, ohne dass es zu einer Diffusion der kritischen Legierungsbestandteile kommt. Das Bauteil kann vorteilhaft deswegen beispielsweise einer Wärmebehandlung zur Verringerung der Eigenspannungen unterzogen werden, wodurch auch komplexere Bauteile hergestellt werden können und ein spannungsbedingter Verzug durch die Nachbehandlung abgebaut werden kann. Dies erhöht den konstruktiven Gestaltungsspielraum für additiv hergestellte Bauteile.

Die notwendige Dicke der Diffusionssperrschicht kann bei Kenntnis des Materials der Diffusionssperrschicht und dem Bestandteil (also dem chemischen Element oder der chemischen Verbindung), dessen Diffusion in das jeweils andere Teilvolumen verhindert werden soll, ermittelt werden. Dabei ist auf den maximalen Diffusionsweg des entsprechenden Bestandteils in dem Material der Diffusionssperrschicht abzustellen. Der maximale Diffusionsweg kann auch von der Länge der thermischen Beanspruch abhängen, der sowohl durch die beim additiven Herstellen herrschenden Temperaturen als auch durch den Verlauf einer Nachbehandlung vorgegeben sein kann. Die thermische Beanspruchung beim additiven Herstellungsverfahren wird einmal durch den Energieeintrag des Energiestrahls, aber auch durch eine eventuelle Temperierung der Bauteilumgebung, wie z. B. dem Pulverbett, bestimmt. Auch die Verfahrensführung einer eventuellen thermischen Nachbehandlung, d. h. die Dauer der Nachbehandlung und das Temperaturniveau dieser Wärmebehandlung, können den Diffusionsweg beeinflussen. Zum Schluss kann auch eine Betriebstemperatur und eine Betriebsdauer des Bauteils im geplanten Einsatz Berücksichtigung finden, um den maximalen Diffusionsweg zu ermitteln. Um eine vollständige Diffusionssperre durch die Diffusionssperrschicht zu erreichen, muss diese Diffusionssperrschicht hinsichtlich ihrer Dicke dem maximalen Diffusionsweg mindestens entsprechen. Allerdings kann es für bestimmte Anwendungsfälle auch ausreichen, die Diffusion von Bestandteilen zwischen den Teilvolumina nicht vollständig, sondern nur weitgehend zu verhindern. In diesem Fall kann die Dicke der Diffusionssperrschicht auch beispielsweise bei über 90 % oder über 80 % des maximalen Diffusionswegs des entsprechenden Bestandteils liegen. Beispielsweise könnte das erste Teilvolumen aus einem ferritischen Stahl, das daran anschließende zweite Teilvolumen aus einem Nickel-Basiswerkstoff als Diffusionssperrschicht und ein drittes Teilvolumen anschließend an das zweite Teilvolumen als aus einem austenitischen Stahl bestehen.

Gemäß einer vorteilhaften Ausgestaltung der Erfindung ist vorgesehen, dass die Übergangszone des Bauteils aus einer Mischung des ersten Baumaterials und des zweiten Baumaterials hergestellt wird. Das Mischungsverhältnis der beiden Baumaterialien kann in der Übergangszone konstant gewählt werden oder in Abhängigkeit von der Entfernung zum jeweiligen Teilvolumen variiert werden. Vorstellbar ist beispielsweise ein Konzentrationsgradient, wobei in der Nähe des ersten Teilvolumens das erste Baumaterial in einer höheren Konzentration als das zweite Baumaterial vorliegt und in der Nähe des zweiten Teilvolumens das zweite Baumaterial in einer höheren Konzentration als das erste Baumaterial vorliegt. Hierdurch lässt sich ein stufenloser Übergang zwischen den beiden Teilvolumina erzeugen, so dass beispielsweise auch die thermischen Ausdehnungseigenschaften kontinuierlich oder stufenweise örtlich variiert werden können.

Gemäß einer weiterführenden Ausgestaltung der Erfindung ist vorgesehen, dass die herzustellenden Lagen jeweils vollständig im ersten Teilvolumen oder in der Übergangszone oder im zweiten Teilvolumen liegen. Hierdurch wird die Fertigung weiter vereinfacht, weil jede der herzustellenden Lagen genau ein Baumaterial enthält. Ein solches Verfahren kann vorteilhaft in vergleichsweise einfach aufgebauten Anlagen für das additive Herstellen durchgeführt werden, wobei in der Anlage lediglich ein Materialwechsel vorgenommen werden muss, wenn die entsprechende Lage aus einem neuen Baumaterial an der Reihe ist, hergestellt zu werden. Dabei kann das Baumaterial vollständig, also inklusive des im Pulverbett befindlichen und nicht aufgeschmolzenen Baumaterials gewechselt werden, damit dieses sortenrein bleibt und für spätere Herstellungsgänge noch verwendet werden kann. Alternativ ist es auch möglich, eine Vermischung von Baumaterial im Pulverbett zuzulassen und nur im Bereich der herzustellenden Lagen des Bauteils dafür zu sorgen, dass hier das Baumaterial sortenrein vorliegt.

Gemäß einer alternativen Ausgestaltung der Erfindung ist vorgesehen, dass zumindest in einem Teil der herzustellenden Lagen mindestens zwei der verwendeten Baumaterialien ortsaufgelöst aufgetragen werden. Vorzugsweise kann dieses ortsaufgelöste Auftragen von Baumaterial mit einer Dosiervorrichtung erfolgen, wie diese eingangs bereits beschrieben wurde. Hierbei ist es vorteilhaft möglich, innerhalb einer Lage auch gleichzeitig oder nacheinander Teilbereiche des ersten Teilvolumens und/oder des zweiten Teilvolumens und/oder des dritten Teilvolumens herzustellen. Sollen diese Teilbereiche in einem Arbeitsgang hergestellt werden, so werden die unterschiedlichen Baumaterialien ortsaufgelöst und über die vollständige Fläche der Lage aufgebracht, so dass die Lage in den Teilbereichen aus unterschiedlichem Baumaterial besteht. Dieses wird anschließend mit dem Energiestrahl verfestigt, wobei eventuell für die unterschiedlichen Baumaterialien unterschiedliche Verfahrensparameter gewählt werden können (Energiedichte des Energiestrahls, Schreibgeschwindigkeit des Energiestrahls in der herzustellenden Lage).

Alternativ ist es auch möglich, nacheinander erst eines der Baumaterialien ortsaufgelöst aufzubringen und zu verfestigen und anschließend nach dem Entfernen von überschüssigem Baumaterial das nächste der Baumaterialien ortsaufgelöst in Teilbereichen der Lage aufzubringen, wo noch kein Baumaterial verfestigt wurde und dieses anschließend zu verfestigen. Anschließend kann auch noch ein weiteres der Baumaterialien aufgebracht und verfestigt werden, wie dies vorstehend schon beschrieben wurde, und so weiter.

Eine besondere Ausgestaltung der Erfindung wird erhalten, wenn das Bauteil in einem Pulverbett erzeugt wird und vor einem Wechsel des Baumaterials das bestehende Pulverbett mit einer Maske abgedeckt wird. Diese Maske muss so ausgebildet sein, dass die herzustellende Lage es Bauteils freibleibt. Mit der Maske wird damit nur derjenige Teil der Oberfläche des Pulverbetts abgedeckt, der nicht zur Herstellung des Bauteils verfestigt werden soll. Der Vorteil liegt darin, dass weiteres aufgebrachtes Baumaterial einer anderen Art auf dem in Entstehung befindlichen Bauteil verfestigt werden kann und in Bereichen, wo dies nicht geplant ist, das lose Baumaterial durch die Maske von dem vorher verwendeten Baumaterial getrennt wird. Daher kann es nicht zu einer Vermischung der Baumaterialien kommen und es muss daher das vorher verwendete Baumaterial nicht aus dem Pulverbehälter entfernt werden.

Eine besondere Ausgestaltung der Erfindung sieht vor, dass die Übergangszone aus ineinander verschachtelten ersten Volumenelementen aus dem ersten Baumaterial und zweiten Volumenelementen aus dem zweiten Baumaterial zusammengesetzt wird, wobei die Geometrie und Lage der ersten Volumenelemente und der zweiten Volumenelemente derart vorgegeben wird, dass diese einander berühren. Anders als bei einer Mischung von dem ersten Baumaterial und dem zweiten Baumaterial weisen die ersten Volumenelemente und zweiten Volumenelemente eine definierte Geometrie auf, so dass die Geometrie der Übergangszone durch die an das Fertigungsverfahren angepassten Daten des Bauteils bestimmt werden. Die Berührung der Volumenelemente untereinander schafft insgesamt eine größere Grenzfläche zwischen dem ersten Baumaterial und dem zweiten Baumaterial, wodurch eine bessere mechanische Kopplung zwischen dem ersten Teilvolumen und dem zweiten Teilvolumen erzeugt wird. Hierdurch kann beispielsweise ein unterschiedliches thermisches Ausdehnungsverhalten der beiden Teilvolumina ausgeglichen werden.

Vorteilhaft ist es, wenn die Volumenelemente die Form von Prismen aufweisen, wobei deren Mantelflächen jeweils senkrecht zum Verlauf der Lagen ausgerichtet sind. Diese Strukturen lassen sich bei der Herstellung der Lagen besonders einfach erzeugen. Auch sind die zur Herstellung derartiger Prismen zu berücksichtigenden Datensätze einfach zu erzeugen. Auch die Dosierung des ersten Baumaterials und des zweiten Baumaterials wird hierdurch vereinfacht. Zuletzt ist es möglich, die Prismen jeweils aus dem ersten Baumaterial und dem zweiten Baumaterial untereinander zu verschachteln, um eine möglichst große Grenzfläche zwischen diesen Strukturen zu erzeugen.

Besonders vorteilhaft ist es, wenn die Volumenelemente zumindest teilweise mit dem jeweiligen Teilvolumen aus demselben Baumaterial in Verbindung stehen. Die Volumenelemente aus dem jeweils selben Baumaterial wie das benachbarte Teilvolumen verbessern vorteilhaft die Verbindung der Übergangszone mit dem betreffenden Teilvolumen.

Eine weitere Ausgestaltung der Erfindung wird erhalten, wenn die ersten Volumenelemente und die zweiten Volumenelemente als einander sich durchdringende räumliche Gitterstrukturen ausgebildet werden. Dabei können diese Gitterstrukturen jeweils teilweise mit den jeweiligen Teilvolumen aus demselben Baumaterial in Verbindung stehen. Die Gitterstrukturen führen zu einer vorteilhaft starken Verschachtelung der Volumenelemente, so dass eine besonders stabile Verbindung der beiden Teilvolumina des Bauteils ermöglicht wird. Insbesondere bei mechanischen Beanspruchungen oder thermischen Dehnungen lassen sich daher vorteilhaft große Kräfte übertragen, weil auch höhere Spannungen im Gefüge des Bauteils nicht zu einem Versagen an dem Übergang von dem ersten Teilvolumen in das zweite Teilvolumen führen. Die räumlichen Gitterstrukturen sind dabei vorteilhaft mit einer Geometrie ausgestattet, das das räumliche Gitter aus dem ersten Baumaterial gerade die Negativform des räumlichen Gitters aus dem zweiten Baumaterial bildet. Die Durchdringung der beiden räumlichen Gitter führt damit zu einer Übergangszone ohne Hohlräume.

Gemäß einer anderen Ausgestaltung der Erfindung ist vorgesehen, dass die Volumenelemente eine Grundfläche aufweisen, über die sie mit demjenigen Teilvolumen verbunden sind, das aus demselben der Baumaterialien hergestellt wird, und dass die Volumenelemente mit zunehmendem Abstand von der Grundfläche spitz zulaufen. Volumenelemente mit einer derartigen Geometrie bewirken, dass der Anteil an Baumaterial in der Nähe des betreffenden Teilvolumens größer ist, als in weiterer Entfernung. Deswegen steht eine vergleichsweise große Grundfläche zur Verbindung mit dem betreffenden Teilvolumen aus demselben Baumaterial zur Verfügung. Gleichzeitig vergrößert die Oberfläche des so gestalteten Volumenelements die Grenzfläche, die für einen Übergang von dem einen Baumaterial in das andere Baumaterial im Bauteil zur Verfügung steht. Dieser Effekt kann vorteilhaft noch vergrößert werden, wenn die Volumenelemente mit senkrecht zur Grundfläche verlaufenden Rippen hergestellt werden.

Gemäß einer besonderen Ausgestaltung der Erfindung ist vorgesehen, dass die Volumenelemente mit Hinterschneidungen hergestellt werden. Als Hinterschneidungen in diesem Zusammenhang sind Geometrien der Volumenelemente zu verstehen, die dazu führen, dass bezogen auf die Lagenfolge des herzustellenden Bauteils Teilbereiche entstehen, die jeweils mit dem anderen Baumaterial ausgefüllt werden können. Diese Teilbereiche liegen dann in einer Aufsicht auf das Volumenelement in Richtung desjenigen Teilvolumens, welches aus demselben Material wie das hinterschnittene Volumenelement gefertigt ist, hinter dem Material des betreffenden Volumenelements. Hierdurch wird vorteilhaft eine formschlüssige Verbindung zwischen den Teilvolumina erzeugt, die durch die Volumenelemente in der Übergangszone erzeugt werden. Der Formschluss verbessert vorteilhaft die mechanische und thermische Belastbarkeit des Übergangs zwischen den beiden Teilvolumina.

Vorteilhaft können die Volumenelemente in einer zu den Lagen senkrechten Schnittfläche ein Profil in Form eines T haben. Dieses Prifil steht sozusagen auf den betreffenden Teilvolumen aus demselben Baumaterial, so dass unterhalb des Querbalkens des T Hinterschneidungen entstehen. Hierbei handelt es sich vorteilhaft um eine einfache Geometrie zur Herstellung von Hinterschneidungen.

Eine andere Möglichkeit besteht darin, dass die Volumenelemente aus gestapelten Formelementen mit in Stapelrichtung gesehen konstanter Grundfläche hergestellt werden, wobei aufeinander folgende Formelemente derart gegeneinander verdreht und/oder verschoben hergestellt werden, dass hierdurch die Hinterschneidungen entstehen. Dies ist gewährleistet, da eine Verdrehung oder Verschiebung der Formelemente dazu führt, dass die Volumenelemente mit ihren Grundflächen nicht mehr direkt aufeinanderliegen. Vorteilhaft können damit die Hinterschneidungen durch Herstellung von Volumenelementen mit derselben Geometrie erzeugt werden, wodurch vorteilhaft der Programmieraufwand für die Übergangszone gering gehalten wird.

Weitere Einzelheiten der Erfindung werden nachfolgend anhand der Zeichnungen erläutert, wobei gleiche oder sich entsprechende Zeichnungselemente in den Figuren nur insoweit mehrfach erläutert werden, wie sich Unterschiede zwischen den einzelnen Figuren ergeben. Es zeigen:
- Figur 1: eine Anlage zur Durchführung eines selektiven Laserschmelzens, mit der ein Ausführungsbeispiel des erfindungsgemäßen Verfahrens durchgeführt werden kann, im Schnitt,
- Figur 2 bis 5: ausgewählte Schritte eines Ausführungsbeispiels des erfindungsgemäßen Verfahrens geschnitten,
- Figur 6: ein anderes Ausführungsbeispiel des erfindungsgemäßen Verfahrens als Seitenansicht,
- Figur 7 bis 9: Ausschnitte von Bauteilen, welche mit dem in Figur 6 gezeigten Ausführungsbeispiel des erfindungsgemäßen Verfahrens hergestellt werden können und
- Figur 10 und 11: Bauteile, welche mit dem in Figur 6 gezeigten Ausführungsbeispiel des erfindungsgemäßen Verfahrens hergestellt werden können, in dreidimensionaler Ansicht.

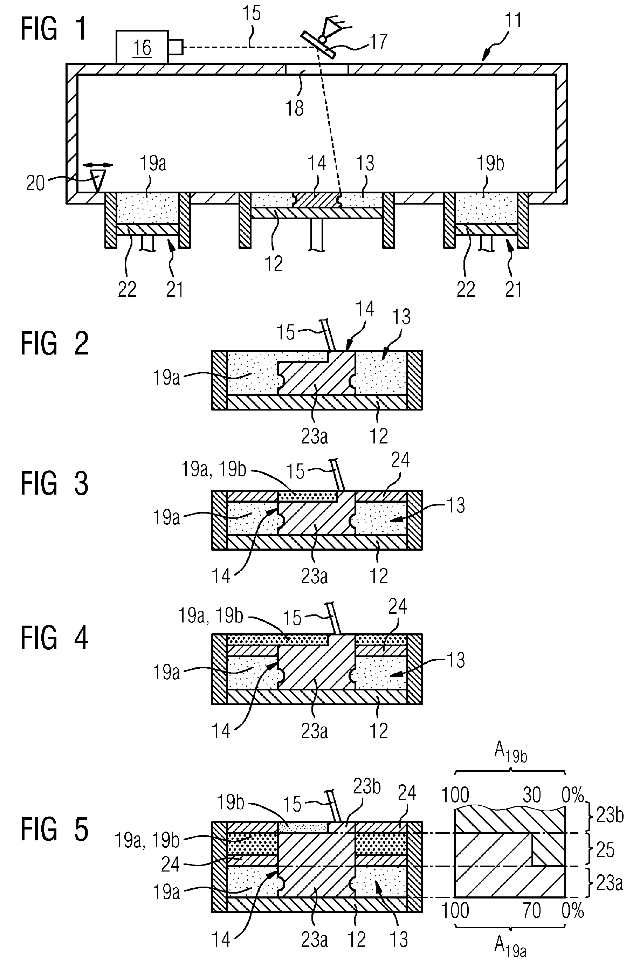

In Figur 1 ist eine Anlage zum Laserschmelzen dargestellt. Diese weist eine Prozesskammer 11 auf, in der eine absenkbare Bauplattform 12 zur Herstellung eines Pulverbetts 13 vorgesehen ist. Auf der Bauplattform 12 kann ein Bauteil 14 hergestellt werden, indem ein Energiestrahl 15 in Form eines Laserstrahls von einem Laser 16 erzeugt und über einen Umlenkspiegel 17 durch ein Fenster 18 in der Prozesskammer 11 auf das Bauteil 14 gerichtet wird.

Die Herstellung des Bauteils 11 erfolgt lagenweise, wobei zu diesem Zweck die Bauplattform 12 sukzessive abgesenkt werden kann. Ein erstes Baumaterial 19a oder ein zweites Baumaterial 19b können mittels eines Abstreifers 20, der in Richtung des dargestellten Doppelpfeils waagerecht verschiebbar ist, zur lagenweisen Befüllung des Pulverbetts 13 dosiert werden. Das Baumaterial 19a, 19b ist zu diesem Zweck jeweils in einem Pulvervorrat 21 untergebracht, wobei ein axial verschiebbarer Dosierzylinder 22 die von dem Abstreifer 20 zu transportierende Pulvermenge vorgibt. Ein drittes Baumaterial kann in einem nicht dargestellten Pulvervorrat untergebracht sein, der sich hinter der Zeichenebene befindet und durch einen nicht dargestellten Abstreifer rechtwinklig zu dem Doppelpfeil des dargestellten Abstreifers 20 dosiert werden kann.

In Figur 2 ist dargestellt, wie das Bauteil 14 zunächst mit einem ersten Teilvolumen 23a aus dem ersten Baumaterial 19a in mehreren Lagen hergestellt werden kann. Die aktuelle Lage befindet sich gerade in Herstellung, wobei der Energiestrahl 15 bereits die Lage bereits hergestellt hat und sich oberhalb des restlichen Bauteils 14 noch das Baumaterial 19a befindet. Das Pulverbett 13, wie in Figur 2 dargestellt, könnte beispielsweise in einer Anlage gemäß Figur 1 enthalten sein. Dargestellt sind allerdings lediglich die Bauplattform 12 und die seitlichen Begrenzungen des Pulverbetts 13.

In Figur 3 ist dargestellt, dass das erste Teilvolumen 23a mit dem Verfahrensschritt gemäß Figur 2 abgeschlossen wurde. Daher wird nun eine Maske 24 auf das Pulverbett 13 aufgelegt, welche im Bereich des Bauteils 14 eine Öffnung aufweist. Dort wird ein Gemisch aus den Baumaterialien 19a, 19b aufgebracht und durch den Laser 15 verfestigt. Hierdurch wird die erste Lage einer Übergangszone hergestellt, wobei Figur 4 zeigt, wie nachfolgende Lagen der Übergangszone hergestellt werden können. Dabei werden die Baumaterialien 19a, 19b als Gemisch auf der Maske 24 und dem in Entstehung befindlichen Bauteil aufgetragen.

Der Figur 5 ist zu entnehmen, dass nach Abschluss der Herstellung der Übergangszone eine weitere Maske 24 oberhalb der anderen Maske 24 auf das Pulverbett 13 aufgelegt werden kann. In der Maskenöffnung wird nun das zweite Baumaterial 19b aufgetragen und wieder durch den Laserstrahl 15 verfestigt. Weitere Lagen können in analoger Weise zu Figur 4 erzeugt werden, um das zweite Teilvolumen 23b zu erzeugen.

Die Übergangszone 25 ist in einer schematischen Darstellung neben dem Pulverbett 13 dargestellt. Die strichpunktierten Linien kennzeichnen das Niveau in dem Bauteil 14, wo das erste Teilvolumen 23a in die Übergangszone 25 und die Übergangszone 25 in das zweite Teilvolumen 23b übergehen. Zu erkennen ist außerdem der Anteil A₁₉ₐ des ersten Baumaterials und A_{19b} des zweiten Baumaterials in den jeweiligen Teilbereich 23a, 23b und der Übergangszone 25. Es wird deutlich, dass das erste Teilvolumen 23a zu 100 % aus dem ersten Baumaterial und das zweite Teilvolumen 23b zu 100 % aus dem zweiten Baumaterial besteht. Für die Übergangszone ist eine Zusammensetzung des Baumaterials aus dem ersten Baumaterial 19a und dem zweiten Baumaterial 19b dergestalt gewählt worden, dass das erste Baumaterial 19a zu 70 % und das zweite Baumaterial 19b zu 30 % in dem Gemisch enthalten ist. Dies ist durch die Schraffuren angedeutet.

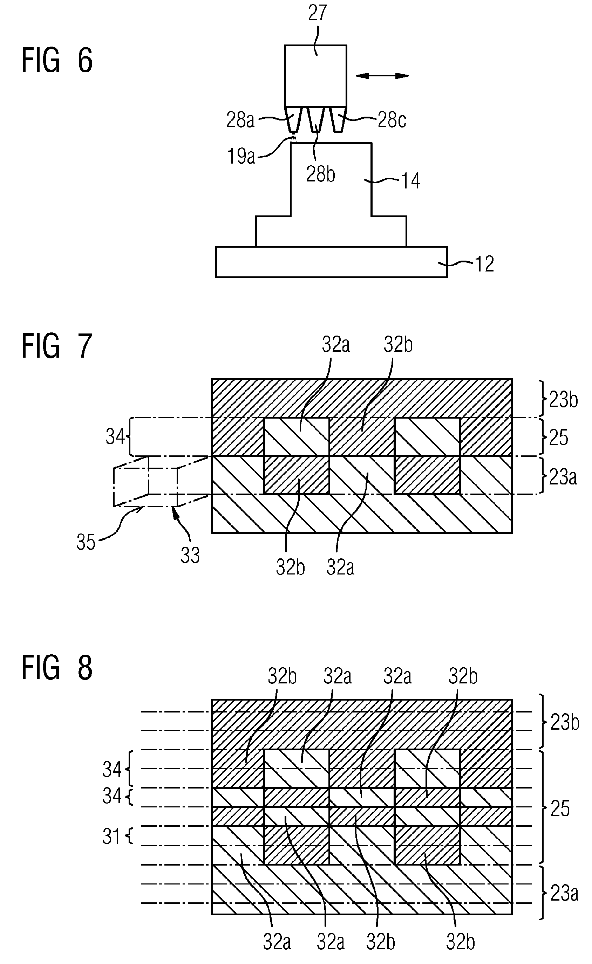

In Figur 6 ist dargestellt, dass das Baumaterial auch mit einer Dosiervorrichtung 27 auf das Bauteil 14 aufgebracht werden kann. Bei diesem Verfahren wird das Baumaterial nur auf das in Entstehung befindliche Bauteil 14 aufgebracht, welches selbst nicht von einem Pulverbett umgeben ist. Die Dosiervorrichtung 27 kann selbstverständlich auch bei einem Pulverbett verwendet werden (nicht dargestellt). Die Dosiervorrichtung 27 enthält in nicht dargestellter Weise mehrere Vorratsbehälter für das erste Baumaterial 19a, welches gerade über einen ersten Dosiertrichter 28a dosiert wird und jeweils für das zweite Baumaterial und ein drittes Baumaterial, welche jeweils über die Dosiertrichter 28b und 28c dosiert werden können. Auf diese Weise ist es auch möglich, eine Lage auf dem Bauteil 14 herzustellen, die ortsaufgelöst unterschiedliche Baumaterialien enthält, wie dies an den Beispielen der Figuren 7 bis 11 näher erläutert werden kann.

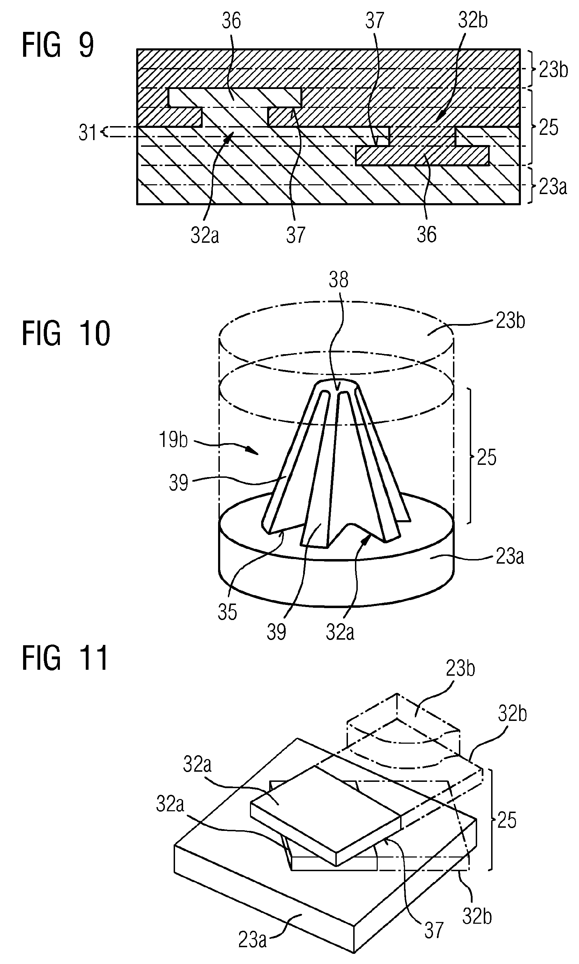

Gemäß den Figuren 7 bis 11 ist die Übergangsstruktur 25 anders als in Figur 5 dargestellt durch Volumenelemente 32a, 32b mit bestimmten Geometrien ausgebildet. Diese Volumenelemente 32a, 32b können durch geeignete Dosierung mittels der Dosiervorrichtung 27 erzeugt werden, wobei die Volumenelemente auch aus mehreren Lagen 31 gebildet werden können, wie in Figur 8 und 9 durch Strichpunktlinien angedeutet. Die Strichpunktlinien in den Figuren 7, 10 und 11 deuten lediglich die Grenzen zwischen den einzelnen Volumenelementen 32a, 32b, den ersten Teilvolumina 23a und den zweiten Teilvolumina 23b an. Die Volumenelemente 32a bestehen aus demselben Baumaterial, wie das erste Teilvolumen 23a und die Volumenelemente 32b bestehen aus demselben Baumaterial wie das Teilvolumen 23b. Dies ist auch durch entsprechende Schraffuren angedeutet, so dass nicht alle Volumenelemente 32a, 32b mit einem Bezugszeichen versehen werden müssen.

In Figur 7 ist dargestellt, dass die Volumenelemente 32a, 32b die Geometrie eines Prismas 33 haben, welches eine quadratische Grundfläche 35 aufweist. Es handelt sich daher um Quader. Allerdings können die Prismen 33 auch andere Grundflächen aufweisen (nicht dargestellt), beispielsweise die eines regelmäßigen Sechsecks. Grundflächen, bei denen eine die Übergangszone vollständig ausfüllende Verschachtelung von Volumenelementen 32a mit Volumenelementen 32b möglich ist, finden bevorzugt Anwendung. Denkbar sind auch Anordnungen, bei denen die Grundflächen der Prismen der Volumenelemente 32a von denen der Volumenelemente 32b abweichen. Bei Achtecken und Quadraten ist beispielsweise ebenfalls eine solche Verschachtelung möglich. Letztere Anordnungen können gewählt werden, wenn der Anteil der Baumaterialien in der Übergangszone unterschiedlich ausgeprägt sein soll.

Wie Figur 7 weiter zu entnehmen ist, sind die Volumenelemente 32a und die Volumenelemente 32b im dargestellten Schnitt abwechselnd angeordnet. Diese Abwechslung erfolgt auch senkrecht zur Zeichenebene, so dass sich in einer Aufsicht auf das Pulverbett ein Schachbrettmuster für die Anordnung der Volumenelemente ergeben würde. Die Volumenelemente sind außerdem je zwei übereinander in zwei Etagen 34 angeordnet, wobei sich in den beiden dargestellten Etagen jeweils ein inverses Schachbrettmuster der Volumenelemente ausbildet. Dies bedeutet, dass sich auch in der Lagenfolge gesehen erste Volumenelemente 32a mit zweiten Volumenelementen 32b abwechseln.

Jeweils die Hälfte der Volumenelemente 32a, 32b liegen jeweils mit ihrer Grundfläche auf den benachbarten Teilvolumina 23a, 23b aus demselben Baumaterial auf. Hierdurch entsteht eine zuverlässige und mechanisch sowie thermisch belastbare Verbindung jeweils der Übergangszone 25 mit den benachbarten Teilvolumina 23a, 23b. Innerhalb der Übergangszone erlauben die Volumenelemente 32a, 32b einen Abbau von Spannungen und bewirken eine Oberflächenvergrößerung der Grenzfläche der beiden Baumaterialien untereinander.

In Figur 8 ist eine Konfiguration dargestellt, bei der die Volumenelemente 32a, 32b wie in Figur 7 in den Etagen 34 ebenfalls schachbrettartig angeordnet sind. Allerdings lässt sich Figur 8 entnehmen, dass auch mehr als zwei Etagen 34 vorgesehen werden können und außerdem die Etagen eine unterschiedliche Höhe aufweisen können (die Höhe wird senkrecht zur Erstreckung der einzelnen Lagen 31 gemessen). Durch Vorsehen unterschiedlicher Höhen für die Etagen 34 lässt sich der Übergang zwischen den Teilvolumina 23a, 23b noch fließender gestalten.

In Figur 9 ist dargestellt, dass die Volumenelemente 32a, 32b auch Bereiche in Form eines T-Profils 36 aufweisen können. Hierdurch entstehen Hinterschneidungen 37, welche zu einem besonders stabilen Verbund zwischen den Volumenelementen 32a, 32b beitragen. Die Volumenelemente 32a, 32b werden innerhalb mehrerer Lagen 31 hergestellt, wobei die Geometrie so ausgebildet wird, dass die Zwischenräume zwischen den Hinterschneidungen 37 und das T-Profil jeweils ein Vielfaches der Dicke der Lagen 31 betragen. Dies vereinfacht vorteilhaft die lagenweise Herstellung der Volumenelemente 32a, 32b.

In Figur 10 ist nur das erste Teilvolumen 23a und ein mit seiner Grundfläche 35 auf dieses aufsetzendes Volumenelement 32a dreidimensional dargestellt. Die dieses Volumenelement 32a umgebende Übergangszone 25 sowie das Teilvolumen 23b ist nur strichpunktiert angedeutet. Das Volumenelement 32a läuft mit zunehmender Entfernung von dem Teilvolumen 23a spitz zu und weist senkrecht ausgerichtete und von der Spitze 38 des Volumenelements 32a zur Grundfläche 25 verlaufende Rippen 39 auf. Dadurch wird die Oberfläche vergrößert, mit der das Volumenelement 32a aus dem ersten Baumaterial mit dem zweiten Baumaterial 19b der Übergangszone 25 verbunden ist. Mit den ersten Volumenelementen 32a vergleichbare Volumenelemente können, auch wenn dies in Figur 10 nicht dargestellt ist, auch ausgehend vom zweiten Teilvolumen 23b vorgesehen werden.

In Figur 11 ist dargestellt, dass die Volumenelemente 32a, 32b auch aufeinander gestapelt hergestellt werden können. Die Volumenelemente 32a, 32b gemäß Figur 4 weisen jeweils eine quadratische Grundfläche auf und werden jeweils mit einem bestimmten Drehwinkel bezogen auf Volumenelemente in der benachbarten Etage hergestellt. Hierdurch ergeben sich Hinterschneidungen 37. Innerhalb einer Etage können die Volumenelemente 32a, 32b, wie bereits beschrieben, schachbrettartig angeordnet sein. Dargestellt ist außerdem, dass sich oberhalb und unterhalb der durch die Volumenelemente 32a, 32b ausgebildeten Übergangszone 25 jeweils das erste Teilvolumen 23a und das zweite Teilvolumen 23b des Bauteils befinden. Die Teilvolumina sind jeweils nur als kleine Ausschnitte de Bauteils angedeutet. Alle Bereiche des Bauteils aus dem zweiten Baumaterial sind mit Strichpunktlinien angedeutet, um die Übersichtlichkeit in Figur 11 zu gewährleisten.

Statt einer verdrehten Anordnung der gestapelten Volumenelemente 32a, 32b ist es auch möglich, diese mit einer Linearverschiebung bezüglich der im Stapelrichtung darüber oder darunter liegenden Volumenelemente zu versehen. Auch auf diese Weise entstehen Hinterschneidungen, wobei die Schachbrettmuster untereinander nicht verdreht werden, also dieselbe Ausrichtung behalten. Eine lineare Verschiebung kann sowohl entlang der einen Kante als auch entlang der rechtwinklig dazu ausgerichteten anderen Kante des Volumenelements 32a, 32b oder auch in beiden Richtungen erfolgen.

## Patentansprüche

1. Verfahren zum additiven Herstellen eines Bauteils (14), bei dem
• lagenweise Partikel mindestens zweier unterschiedlicher Baumaterialien auf eine Bauplattform (12) oder das in Entstehung befindliche Bauteil (14) aufgetragen werden und
• Lagen (31) des in Entstehung befindlichen Bauteils (14) erzeugt wird, indem die Partikel durch einen Energiestrahl (15) lokal verfestigt werden,
**dadurch gekennzeichnet,**
**dass**
• ein erstes Teilvolumen (23a) des Bauteils (14) aus einem ersten Baumaterial (19a) hergestellt wird,
• ein zweites Teilvolumen (23b) des Bauteils (14) aus einem zweiten Baumaterial (19b) hergestellt wird und
• ein drittes Teilvolumen des Bauteils als Übergangszone (25) hergestellt wird, wobei die Übergangszone (25) zwischen dem ersten Teilvolumen (23a) und dem zweiten Teilvolumen (23b) liegt und sowohl aus dem ersten Baumaterial als auch aus dem zweiten Baumaterial (19b) gebildet wird.

2. Verfahren nach Anspruch 1,
**dadurch gekennzeichnet,**
**dass** die Übergangszone (25) des Bauteils aus einer Mischung des ersten Baumaterials (19a) und des zweiten Baumaterials (19b) hergestellt wird.

3. Verfahren nach Anspruch 2,
**dadurch gekennzeichnet,**
**dass** die herzustellenden Lagen (31) jeweils vollständig im ersten Teilvolumen (23a) oder in der Übergangszone (25) oder im zweiten Teilvolumen (23b) liegen.

4. Verfahren nach Anspruch 1,
**dadurch gekennzeichnet,**
**dass** zumindest in einem Teil der herzustellenden Lagen (31) das erste Baumaterial (19a) und das zweite Baumaterial (19b) ortsaufgelöst aufgetragen werden.

5. Verfahren nach Anspruch 4,
**dadurch gekennzeichnet,**
**dass** das Auftragen der Baumaterialien (19a, 19b) mit einer Dosiervorrichtung (27) ortsaufgelöst durchgeführt wird.

6. Verfahren nach Anspruch 4,
**dadurch gekennzeichnet,**
**dass** das Auftragen der Baumaterialien (19a, 19b) für die herzustellende Lage (31) nacheinander erfolgt, wobei jeweils die ganze Lage (31) mit dem jeweiligen Baumaterial (19a, 19b) ausgefüllt wird und überschüssiges Baumaterial (19a, 19b) nach dem Verfestigen von dem in Entstehung befindlichen Bauteil (14) entfernt wird.

7. Verfahren nach einem der voranstehenden Ansprüche,
**dadurch gekennzeichnet,**
**dass** das Bauteil (14) in einem Pulverbett (13) erzeugt wird und bei einem Wechsel des Baumaterials (19a, 19b) auch das im Pulverbett (13) befindliche Baumaterial (19a, 19b) ausgewechselt wird.

8. Verfahren nach einem der Ansprüche 1 bis 7,
**dadurch gekennzeichnet,**
**dass** das Bauteil (14) in einem Pulverbett (13) erzeugt wird und vor einem Wechsel des Baumaterials (19a, 19b) das bestehende Pulverbett mit einer Maske (24) abgedeckt wird.

9. Verfahren nach einem der voranstehenden Ansprüche,
**dadurch gekennzeichnet,**
**dass** das erste Teilvolumen (23a) einen Kern des Bauteils (14) bildet und das zweite Teilvolumen (23b) eine Schicht bildet, die den Kern zumindest teilweise umgibt.

10. Verfahren nach einem der voranstehenden Ansprüche,
**dadurch gekennzeichnet,**
**dass** die Übergangszone (25) aus ineinander verschachtelten ersten Volumenelementen (32a) aus dem ersten Baumaterial (19a) und zweiten Volumenelementen (32b) aus dem zweiten Baumaterial (19b) zusammengesetzt wird, wobei die Geometrie und Lage der ersten Volumenelemente (32a) und der zweiten Volumenelemente (32b) derart vorgegeben wird, dass diese einander berühren.

11. Verfahren nach Anspruch 10
**dadurch gekennzeichnet,**
**dass** die Volumenelemente in Form von Prismen (33) hergestellt werden, deren Mantelflächen senkrecht zum Verlauf der Lagen (31) ausgerichtet sind.

12. Verfahren nach einem der Ansprüche 10 oder 11
**dadurch gekennzeichnet,**
**dass** die Volumenelemente zumindest teilweise mit dem jeweiligen Teilvolumen (23a, 23b) aus demselben Baumaterial (19a, 19b) in Verbindung stehen.

13. Verfahren nach einem der Ansprüche 10 oder 12,
**dadurch gekennzeichnet,**
**dass** die ersten Volumenelemente (32a) und die zweiten Volumenelement (32b) als einander sich durchdringende räumliche Gitterstrukturen ausgebildet werden.

14. Verfahren nach Anspruch 10,
**dadurch gekennzeichnet,**
**dass** die Volumenelemente eine Grundfläche (35) aufweisen, über die sie mit demjenigen Teilvolumen verbunden sind, das aus demselben der Baumaterialien (19a, 19b) hergestellt wird, und dass die Volumenelemente mit zunehmendem Abstand von der Grundfläche spitz zulaufen.

15. Verfahren nach Anspruch 14,
**dadurch gekennzeichnet,**
**dass** die Volumenelemente mit senkrecht zur Grundfläche (35) verlaufenden Rippen (39) hergestellt werden.

16. Verfahren nach Anspruch 10,
**dadurch gekennzeichnet,**
**dass** die Volumenelemente mit Hinterschneidungen (37) hergestellt werden.

17. Verfahren nach Anspruch 16,
**dadurch gekennzeichnet,**
**dass** die Volumenelemente in einer zu den Lagen (31) senkrechten Schnittfläche ein Profil in Form eines T haben.

18. Verfahren nach Anspruch 16,
**dadurch gekennzeichnet,**
**dass** die Volumenelemente gestapelt angeordnet werden und mit in Stapelrichtung gesehen konstanter Grundfläche (35) hergestellt werden, wobei aufeinander folgende Formelemente derart gegeneinander verdreht oder verschoben hergestellt werden, dass dabei die Hinterschneidungen (37) entstehen.

19. Bauteil
**dadurch gekennzeichnet,**
**dass** dieses nach einem Verfahren gemäß einem der voranstehenden Ansprüche hergestellt ist.
